# EUROPÄISCHE PATENTSCHRIFT

(11) **EP 1 420 995 B1**
(45) Veröffentlichungstag und Bekanntmachung des Hinweises auf die Patenterteilung: **14.11.2007**
(21) Anmeldenummer: 02767201.3
(22) Anmeldetag: 12.07.2002
(51) Int. Cl.: B62D 1/184, B62D 1/19

(54) **BETÄTIGUNGSHEBEL MIT SOLLKNICKSTELLE FÜR EINE VERSTELLBARE LENKSÄULE**
OPERATING LEVER WITH A BUCKLING POINT FOR AN ADJUSTABLE STEERING COLUMN
LEVIER D'ACTIONNEMENT A POINT DE FLAMBAGE POUR COLONNE DE DIRECTION REGLABLE

(30) Priorität: 21.08.2001 DE 10141010
(43) Veröffentlichungstag der Anmeldung: 26.05.2004
(73) Patentinhaber: Volkswagen Aktiengesellschaft, 38436 Wolfsburg (DE)
(72) Erfinder: RAAV, Stefan, 38108 Braunschweig (DE); SCHIKORA, Daniel, 38372 Büddenstedt (DE); SCHNICK, Jens-Peter, 38102 Braunschweig (DE); GERLOFF, Harald, 38154 Königslutter (DE); LAUE, Jörg, 38550 Isenbüttel (DE); WERNER, Michael, 38368 Mariental (DE)
(86) Internationale Anmeldenummer: PCT/EP2002/007772
(87) Internationale Veröffentlichungsnummer: WO 2003/018384

(56) Entgegenhaltungen:
- DE-A- 1 944 173
- DE-A- 1 951 684
- DE-C- 19 812 179

## Beschreibung

Die Erfindung betrifft eine Arretiervorichtung mit einem Betätigungshebel für eine verstellbare Lenksäule in einem Fahrzeug, insbesondere mit einem mittig unterhalb der Lenksäule angeordneten Betätigungshebel.

Es ist eine Lenksäulenanordnung für ein Kraftfahrzeug bekannt, bei der die Lenksäule in einem Mantelrohr geführt ist, das gegenüber der Fahrzeugkarosserie innerhalb eines vorbestimmten Winkelbereiches in der durch seine Achse bestimmten vertikalen Ebene neigungsverstellbar und gegenüber dem die Lenksäule in einem vorbestimmten Bereich auch in axialer Richtung verschiebbar ist. Das Mantelrohr ist gelenkig mit einer Konsole verbunden, die an einem im Bereich des Armaturenbrettes angeordneten Querträger befestigt ist. Zwischen der Konsole und dem unter dieser angeordneten Mantelrohr ist eine Arretiervorrichtung zur lösbaren Festlegung desselben in einer innerhalb eines vorbestimmten Verstellfeldes gegebenen Neigungs- und Längsposition ausgebildet, die ineinandergreifende Klemmlamellen aufweist, von denen mehrere fest am Mantelrohr und mehrere fest an der Konsole angeordnet sind und die mit einer Einrichtung in Wirkverbindung stehen, die die Lamellen kraftschlüssig zur Anlage aneinander bringt oder zum Lösen des kraftschlüssigen Arretierungsstatus auseinanderspreizt.

Diese Einrichtung weist zu ihrer Betätigung einen Betätigungshebel auf, der unterhalb der Lenksäule angeordnet ist und dessen Griffstück im Arretierungsstatus im wesentlichen parallel zur Lenksäule bzw. zum Mantelrohr ausgerichtet und in einer Mulde in einer Lenksäulenverkleidung beherbergt ist. Dabei ist die Lenksäulenverkleidung als energieaufnehmendes Deformationselement ausgebildet und mit abgerundeten Kanten versehen und kann die bei einem Aufprall eines Knies des Fahrzeugführers eingebrachte Aufprallenergie bei dem zur Verfügung stehenden Deformationsweg weitestgehend abbauen, so daß die Verletzungsgefahr für das Knie des Fahrzeugführers durch einen Aufprall auf die Lenksäulenverkleidung reduziert ist, zumal die Knie in der Normalposition des Fahrzeugführers jeweils seitlich von der Lenksäule positioniert sind und der Betätigungshebel mittig angeordnet ist. Dabei ist die Wahrscheinlichkeit eines derartigen Aufpralls gering und nur bei einer Kollission mit einer seitlichen Kraftkomponente gegeben.

Aus der DE 198 12 179 C1 ist eine Lenksäulenanordnung für ein Kraftfahrzeug bekannt, bei der ein Mantelrohr mittels eines Spindeltriebs axial und teleskopartig verstellbar ist. Der Spindeltrieb weist ein längserstrecktes Stellglied mit einer Sollknickstelle auf. Aus der DE 19 51 684 A ist ein Schalthebel für ein Getriebe eines Kraftfahrzeugs bekannt, der ein umschäumtes Profilmaterial aufweist und so dimensioniert ist, dass er unter Einwirkung größerer Seitenkräfte verformbar ist. Aus der DE 19 44 173 A ist ein Sicherheits-Getriebeschalthebel für ein Kraftfahrzeug bekannt, der eine Sollbruchstelle aufweist, so dass im Falle eines Bruches der verbleibende Teil des Getriebeschalthebels keine Verletzungen von Fahrzeuginsassen verursachen kann.

Es ist nun Aufgabe der Erfindung, eine Arretiervorichtung mit einem Betätigungshebel für eine verstellbare Lenksäule nach dem Oberbegriff des Anspruchs 1 im Hinblick auf den Schutz der Knie des Fahrzeugführers bei einem Aufprall zu verbessern.

Diese Aufgabe wird bei einer Arretiervorichtung nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, daß bei einer Arretiervorrichtung für eine verstellbare Lenksäule in einem Fahrzeug, die zwischen einer fahrzeugfesten Halterung und einem neigungsverstellbar angeordneten und die Lenksäule umschließenden Mantelrohr ausgebildet und angeordnet ist und die einen Betätigungshebel unterhalb und/ oder seitlich des Mantelrohres aufweist, erfindungsgemäß der Betätigungshebel als Deformationselement ausgebildet ist und bei einem Aufprall unter Energieaufnahme, vorzugsweise in Richtung auf das Mantelrohr, deformierbar ist. Der Betätigungshebel ist dabei so angeordnet, daß dieser zwischen einer mantelrohmahen Arretierstellung und einer unterhalb dieser gegebenen (mantelrohrfemeren) Gelöststellung für das Mantelrohr schwenkbar ist, wobei in der Gelöststellung in bekannter Weise im Rahmen eines vorbestimmten Verstellfeldes jede gewünschte Neigung des Mantelrohres und damit der Lenksäule und, je nach Ausführung der Lenksäulenanordnung, auch jede beliebige axiale Stellung der Lenksäule einstellbar ist (längsverstellbare Lenksäule). Der Betätigungshebel ist bedienungseitig mit einem Griffstück versehen und so ausgebildet, daß sich dieses auch in der Arretierstellung im Abstand vom Mantelrohr befindet und ein definierter Deformationsraum zu diesem hin gegeben ist. Bei einem Aufprall mit einer quer zur Fahrzeuglängsrichtung wirkenden Kraftkomponente, beispielsweise bei einem Offset-Crash, besteht die Gefahr des Aufpralls eines der Knie des Fahrzeugführers auf den Betätigungshebel und insbesondere auf das nach unten abstehende Griffstück. Der Betätigungshebel kann bei einem solchen Aufprall mit dem Griffstück unter Energieaufnahme deformiert und in den in Richtung Mantelrohr gegebenen Deformationsraum gedrückt werden, wodurch die Verletzungsgefahr für den Fahrzeuginsassen reduziert ist.

Die Ausbildung des Betätigungshebels als Deformationselement kann auf einfache Weise erfolgen, indem dieser vom Profil her als Biegebalken ausgelegt ist und nach der vom Mantelrohr wegweisenden Richtung abgewinkelt ausgeführt oder sogar hakenartig abgebogen und im Bereich der Abwinklung oder Abbiegung mit einer Sollknickstelle versehen ist, so daß der Betätigungshebel bei einem aufprallbedingten Stoß unter Energieaufnahme in Richtung auf das Mantelrohr biegbar und insbesondere im Bereich der Sollknickstelle plastisch verformbar ist. Dabei sind der hakenartig abgebogene Betätigungshebel so geformt und die Sollknickstelle so angeordnet, daß das Griffstück auf den Betätigungshebel zu bis zur Anlage an diesem geklappt wird.

Der Betätigungshebel kann einen T-profilartigen Querschnitt aufweisen, wobei der Mittelsteg auf der dem Mantelrohr abgewandten Seite angeordnet ist, oder alternativ dazu auch einen Rechteckquerschnitt mit zum Mantelrohr gerichteter langer Profilseite. Zur Ausbildung der Sollknickstelle ist bei ersterer Ausführung der Mittelsteg des Profils im wesentlichen ausgespart, so daß der Betätigungshebel an dieser Stelle einen Rechteckquerschnitt hat. Bei der zweiten Ausführung ist der Rechteckquerschnitt an der Sollbruchstelle verringert.

Der Betätigungshebel besteht vorteilhaft aus Stahl. Das Griffstück ist ebenfalls aus Stahlblech geformt, jedoch mit einer Kunststoffbeschichtung versehen und mit dem Betätigungshebel verschraubt.

Die Arretiervorichtung und das Mantelrohr sind üblicherweise fahrgastzellenseitig von einer Lenksäulenverkleidung umgeben, die mit einer Griffmulde zur Aufnahme des Griffstückes versehen ist. Diese Griffmulde ist in Richtung auf das Mantelrohr zu ausgebildet und weist eine Ausnehmung zur Durchführung des Betätigungshebels und zur Ermöglichung seiner Stellbewegung auf. Dabei sind die Lenksäulenverkleidung und das Griffstück so ausgebildet und angeordnet, daß letzteres in der Arretierstellung an seiner der Lenksäule abgewandten Seite flächenbündig mit der Lenksäulenverkleidung abschließt und keine vorstehenden Kanten gegeben sind, die eine Verletzungsgefahr darstellen könnten. Die Lenksäulenverkleidung selbst ist vorteilhaft auch als Deformationselement ausgebildet, vorzugsweise aus einem Deformationsschaum gebildet, und so unter Energieaufnahme deformierbar. Damit ist die Lenksäulenverkleidung mit dem Betätigungshebel einschließlich des in diese eingelassenen Griffstückes als Gesamtanordnung aufprallenergieabsorbierend ausgebildet, was mit einer Erhöhung des Energieaufnahmevermögens und einer Verbesserung des Schutzes des Fahrzeugführers einhergeht.

Die Erfindung wird nachstehend anhand eines Ausführungsbeispiels erläutert. In den zugehörigen Zeichnungen zeigen:
- Fig. 1:: eine Seitenansicht einer verstellbaren Lenksäulenanordnung,
- Fig. 2:: einen Betätigungshebel für die Arretiereinrichtung der Lenksäulenanordnung, vergrößert,
- Fig. 3a und b:: eine alternative Querschnittsform für den Betätgiungshebel und
- Fig. 4:: eine perspektivische Ansicht einer Lenksäulenverkleidung mit dem eingelassenen Griffstück des Betätigungshebels.

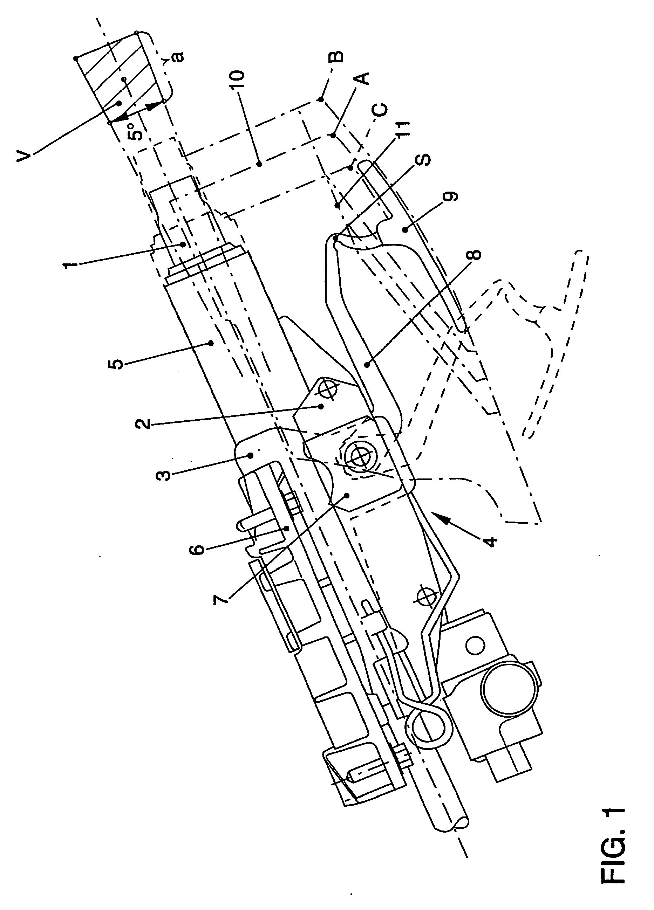

Fig. 1 zeigt eine verstellbare Lenksäule 1 für ein Kraftfahrzeug mit einer ineinandergreifende Klemmlamellen 2 und 3 aufweisenden Arretiervorrichtung 4, wobei die Klemmlamellen 2 in tangentialer Richtung beidseits eines die Lenksäule 1 umschließenden Mantelrohres 5 und die Klemmlamellen 3 an einer an einem Querhauptträger im Armaturenbrettbereich befestigten Konsole 6 angeordnet sind. Das Mantelrohr 5 ist gegenüber der Konsole 6 in einem engen Winkelbereich (etwa 5°) schwenkbar und überdies axial verschiebbar angeordnet, so daß die Stellung der Lenksäule 1 und des an dieser angeordneten Lenkrades (nicht dargestellt) veränderbar ist. Die Klemmlamellen 2 und 3 stehen mit einer Einrichtung 7 in Wirkverbindung, die diese wahlweise kraftschlüssig zur Anlage aneinander bringt oder spreizt, so daß das Mantelrohr 5 mit der Lenksäule 1 in der gewählten Position gegenüber der Konsole 6 arretiert ist, wohingegen im anderen Falle die Klemmlammellen 2 und 3 voneinander gelöst sind, so daß das Mantelrohr 5 gegenüber der Konsole 6 verstellbar ist. Die Einrichtung ist bekannt, so daß sie nicht weiter beschrieben zu werden braucht. Die Lenksäulenanordnung ist dabei so getroffen, daß die Lenksäule 1 im Rahmen eines dargestellten Verstellfeldes V positionsveränderbar ist, wobei ein axialer Stellweg a von max. 50 mm und eine Verstellung des Neigungswinkels von etwa 5° ermöglicht sind, was einem Höhenverstellweg von etwa 40 mm entspricht.

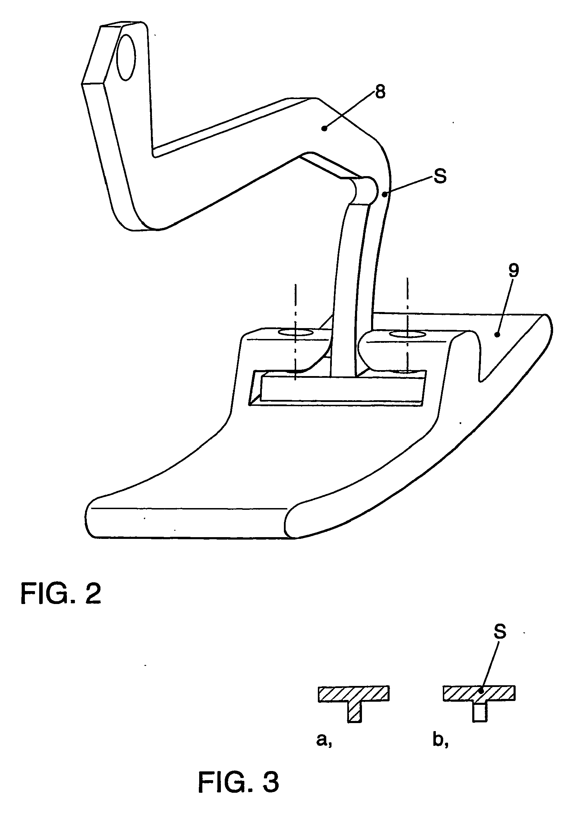

Die Einrichtung 7 weist einen mittig angeordneten Betätigungshebel 8 mit einem Rechteckprofil aus Stahlblech auf, an dessen betätigungsseitigem Ende ein Griffstück 9 angeschraubt ist, das aus einem Stahlblechkern und einer Kunststoffumhüllung besteht. Dieser Betätigungshebel 8, der in Fig. 2 perspektivisch dargestellt ist, ist in Fig. 1 mit durchgezogenen Linien in seiner Arretierstellung und mit gestrichelten Linien in einer Gelöststellung gezeigt, in der eine Verstellung der Lenksäule 1 innerhalb des Verstellfeldes V möglich ist. Der Betätigungshebel 8 ist griffstückseitig hakenförmig abgebogen und als Deformationselement ausgebildet, wozu im Bereich einer im wesentlichen 90°-Abwinklung eine Sollknickstelle S ausgebildet ist, die in einer Querschnittsverringerung von 50% besteht.

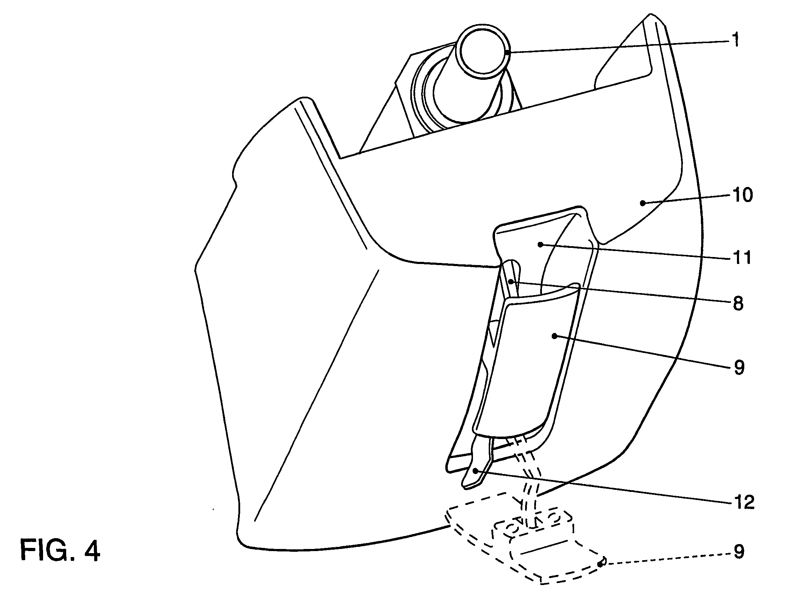

Die Arretiervorrichtung und das Mantelrohr 5 sind von einer zweiteiligen Lenksäulenverkleidung umgeben, deren unterer Teil, die Unterschale 10, in Fig. 4 perspektivisch gezeigt und in Fig. 1 in gestrichelten Linien in drei Längspositionen angedeutet ist, von denen die mittlere die Ausgangsstellung A darstellt und die Stellungen B und C jeweils die Endstellung in den beiden möglichen Verstellrichtungen. Die Unterschale 10 ist mit dem Mantelrohr 5 verbunden und wird bei einer Verstellung desselben mit verstellt. Sie weist eine in Richtung des Mantelrohres 5 ausgebildete Aufnahmemulde 11 für das Griffstück 9 auf und ist mit einem Schlitz 12 zur Durchführung und Schwenkung des Betätigungshebels 8 in seiner vertikalen Anordnungsebene versehen. Der Betätigungshebel 8 ist fahrzeugfest angelenkt, so daß dieser und das Griffstück 9 in der Aufnahmemulde in Abhängigkeit von der Längsverstellung des Mantelrohres 5 verschiedene Positionen, jeweils in der Arretierstellung, einnehmen Das Griffstück 9 schließt in seiner Arretierstellung an seiner der Lenksäule 1 abgewandten Seite flächenbündig mit der Unterschale 10 ab. Diese ist als Deformationselement ausgebildet und besteht aus geschlossenzelligem PUR-Schaum der Dichte 30 g/ l und einer Dekor-Außenhaut. Der für die Unterschale 10 im Bereich der Aufnahmemulde 11 zur Verfügung stehende Deformationsweg in der vertikalen Ebene bis zur Anlage an den Klemmlamellen 3 beträgt in Abhängigkeit von der Stellung der Unterschale 10 gegenüber dem Lamellenblock der Klemmlamellen 3 40 bis 45 mm. Der Deformationsweg für das am Betätigungshebel 8 angeordnete Griffstück 10 beträgt etwa 50 mm.

Bei einem Aufprall eines Knies des Fahrzeugführers auf die Unterschale 10 im Bereich des Griffstückes 9 können sowohl die Unterschale 10 als auch der Betätigungshebel 8 in Richtung auf das Mantelrohr 5 unter Energieaufnahme im genannten Rahmen deformiert werden, wobei der Betätigungshebel 8 im Bereich der Sollknickstelle S abgeknickt und zusammengefaltet wird, bis das Griffstück 10 an dessen langgestreckten Bereich anlegt.

In den Fig. 3a und b ist eine alternative Querschnittsform für den Betätigungshebel gezeigt. Der Querschnitt ist T-profilförmig gestaltet. Im Bereich der Sollknickstelle S ist der Mittelsteg im wesentlichen ausgelassen, so daß dort ein Rechteckquerschnitt gegeben ist.

### BEZUGSZEICHENLISTE

- 1: Lenksäule
- 2: Klemmlamelle
- 3: Klemmlamelle
- 4: Arretiervorrichtung
- 5: Mantelrohr
- 6: Konsole
- 7: Einrichtung
- 8: Betätigungshebel
- 9: Griffstück
- 10: Unterschale
- 11: Aufnahmemulde
- 12: Schlitz
- a: Stellweg
- A: Ausgangsstellung
- B: Endstellung
- C: Endstellung
- V: Verstellfeld
- S: Sollknickstelle

## Patentansprüche

1. Arretiervorrichtung für eine verstellbare Lenksäule (1) in einem Fahrzeug mit einem Betätigungshebel (8), ausgebildet zwischen einer fahrzeugfesten Halterung und einem neigungsverstellbar an dieser gehalterten und die Lenksäule (1) umgebenden Mantelrohr (5), wobei der Betätigungshebel (8) unterhalb und/oder seitlich des Mantelrohres (5) zwischen einer Arretierstellung und einer unterhalb dieser gegebenen Gelöststellung für dasselbe schwenkbar ist und in der Arretierstellung mit einem Griffstück (9) im Abstand vom Mantelrohr (5) angeordnet ist, **dadurch gekennzeichnet, dass** der Betätigungshebel (8) als Deformationselement ausgebildet und bei einem Aufprall mit dem Griffstück (9) in Richtung auf das Mantelrohr (5) unter Energieaufnahme deformierbar gestaltet ist.

2. Arretiervorrichtung nach Anspruch 1, **dadurch gekennzeichnet, dass** der Betätigungshebel (8) abgewinkelt oder griffstückseitig hakenförmig abgebogen und im Bereich der Abwinklung oder Abbiegung mit einer Sollknickstelle (S) versehen ist.

3. Arretiervorrichtung nach Anspruch 2, **dadurch gekennzeichnet, dass** der Betätigungshebel (8) einen Rechteckquerschnitt oder einen T-profilförmigen Querschnitt aufweist und die Sollknickstelle (S) durch eine Querschnittsverringerung gegeben ist.

4. Arretiervorrichtung nach Anspruch 1, 2 oder 3, **dadurch gekennzeichnet, dass** der Betätigungshebel (8) zweiteilig und aus Metall, insbesondere Stahl, gefertigt ist, wobei das Griffstück (9) aus einem Metallkern mit einer Kunststoffbeschichtung besteht und mit dem Hebelarm verschraubt ist.

5. Arretiervorrichtung nach einem oder mehreren der vorhergehenden Ansprüche, **dadurch gekennzeichnet, dass** die Arretiervorichtung (4) und das Mantelrohr (5) von einer Lenksäulenverkleidung (Unterschale 10) umgeben ist und eine in Richtung des Mantelrohres (5) ausgebildete Aufnahmemulde (11) für das Griffstück (9) und innerhalb dieser eine Ausnehmung (12) zur Durchführung des Betätigungshebels (8) aufweist.

6. Arretiervorrichtung nach Anspruch 5, **dadurch gekennzeichnet, dass** die Lenksäulenverkleidung (10) als aufprallenergieabsorbierendes Deformationselement ausgebildet ist.

7. Arretiervorrichtung nach Anspruch 5 oder 6, **dadurch gekennzeichnet, dass** das Griffstück (9) in der Arretierstellung an seiner der Lenksäule (1) abgewandten Seite flächenbündig mit der Lenksäulenverkleidung (10) angeordnet ist.

8. Arretiervorrichtung nach einem der Ansprüche 5 bis 7, **dadurch gekennzeichnet, dass** zwischen dem Mantelrohr (5) und der Lenksäulenverkleidung (10) Deformationselemente angeordnet sind.

## Claims

1. Locking device for an adjustable steering column (1) in a vehicle, the locking device having an actuating lever (8) and being formed between a mounting fixed on the vehicle and a casing tube (5), which is secured on said mounting in a manner enabling its inclination to be adjusted and which surrounds the steering column (1), the actuating lever (8) being able to be pivoted below and/or to the side of the casing tube (5) between a locking position and a release position, which is provided below the latter and is intended for said casing tube, and, in the locking position, being arranged with a handle component (9) at a distance from the casing tube (5), **characterized in that** the actuating lever (8) is designed as a deformation element and, if there is an impact with the handle component (9), is designed such that it can be deformed, absorbing energy, in the direction of the casing tube (5).

2. Locking device according to Claim 1, **characterized in that** the actuating lever (8) is angled or bent in a hook-shaped manner on the side facing the handle component and is provided in the angled or bent region with a predetermined buckling point (S).

3. Locking device according to Claim 2, **characterized in that** the actuating lever (8) has a rectangular cross section or a cross section in the shape of a T-section, and the predetermined buckling point (S) is provided by a reduction in the cross section.

4. Locking device according to Claim 1, 2 or 3, **characterized in that** the actuating lever (8) is manufactured in two parts and from metal, in particular steel, the handle component (9) comprising a metal core with a plastic coating and being screwed to the lever arm.

5. Locking device according to one or more of the preceding claims, **characterized in that** the locking device (4) and the casing tube (5) are surrounded by steering-column cladding (lower shell 10) which has a receiving trough (11), which is formed in the direction of the casing tube (5) and is intended for the handle component (9), and within said receiving trough has a recess (12) for guiding the actuating lever (8) through.

6. Locking device according to Claim 5, **characterized in that** the steering-column cladding (10) is designed as a deformation element which absorbs impact energy.

7. Locking device according to Claim 5 or 6, **characterized in that** in the locking position the handle component (9), on its side facing away from the steering column (1), is arranged flush with the steering-column cladding (10).

8. Locking device according to one of Claims 5 to 7, **characterized in that** deformation elements are arranged between the casing tube (5) and the steering-column cladding (10).

## Revendications

1. Dispositif de blocage pour une colonne de direction réglable (1) dans un véhicule, comprenant un levier d'actionnement (8), réalisé entre une fixation fixée au véhicule et un tube d'enveloppe (5) fixé à celle-ci de manière réglable en inclinaison et entourant la colonne de direction (1), le levier d'actionnement (8) pouvant pivoter en dessous et/ou latéralement au tube d'enveloppe (5) entre une position de blocage et une position libérée donnée du tube d'enveloppe en dessous de la position de blocage, et le levier d'actionnement (8) étant disposé dans la position de blocage avec une pièce de préhension (9) à distance du tube d'enveloppe (5), **caractérisé en ce que** le levier d'actionnement (8) est réalisé sous forme d'élément déformable et est configuré de manière à se déformer en absorbant l'énergie en cas de collision avec la pièce de préhension (9) dans la direction du tube d'enveloppe (5).

2. Dispositif de blocage selon la revendication 1, **caractérisé en ce que** le levier d'actionnement (8) est coudé ou est recourbé en forme de crochet du côté de la pièce de préhension et est muni dans la région du coudage ou de la courbure d'un point de flexion (S).

3. Dispositif de blocage selon la revendication 2, **caractérisé en ce que** le levier d'actionnement (8) présente une section transversale rectangulaire ou une section transversale en forme de profilé en T et le point de flexion (S) est produit par un rétrécissement de la section transversale.

4. Dispositif de blocage selon la revendication 1, 2 ou 3, **caractérisé en ce que** le levier d'actionnement (8) est fabriqué en deux parties en métal, et notamment en acier, la pièce de préhension (9) se composant d'un noyau métallique avec un revêtement de plastique et étant vissée au bras de levier.

5. Dispositif de blocage selon l'une quelconque ou plusieurs des revendications précédentes, **caractérisé en ce que** le dispositif de blocage (4) et le tube d'enveloppe (5) sont entourés par un habillage de la colonne de direction (coque inférieure 10) qui présente un creux de logement (11) réalisé dans la direction du tube d'enveloppe (5) pour la pièce de préhension (9), et à l'intérieur de ce creux est prévu un évidement (12) pour le passage du levier d'actionnement (8).

6. Dispositif de blocage selon la revendication 5, **caractérisé en ce que** l'habillage de la colonne de direction (10) est réalisé sous la forme d'un élément déformable absorbant l'énergie de collision.

7. Dispositif de blocage selon la revendication 5 ou 6, **caractérisé en ce que** la pièce de préhension (9) est disposée dans la position de blocage au niveau de son côté opposé à la colonne de direction (1) en affleurement avec l'habillage de la colonne de direction (10).

8. Dispositif de blocage selon l'une quelconque des revendications 5 à 7, **caractérisé en ce que** l'on dispose entre le tube d'enveloppe (5) et l'habillage de la colonne de direction (10) des éléments déformables.
